# EUROPÄISCHE PATENTANMELDUNG

(11) **EP 4 813 729 A1**
(43) Veröffentlichungstag der Anmeldung: **30.09.2026**
(21) Anmeldenummer: 26159226.5
(22) Anmeldetag: 18.02.2026
(51) Int. Cl.: B60L 53/16

(54) **BATTERIESTECKERSYSTEM FÜR EINE TRAKTIONSBATTERIE EINER MOBILEN ARBEITSMASCHINE, INSBESONDERE EINES FLURFÖRDERZEUGS**

(30) Priorität: 27.03.2025 DE 102025111892; 03.04.2025 DE 102025113048
(71) Anmelder: STILL GmbH, 22113 Hamburg (DE)
(72) Erfinder: Kettenburg, Hans Jörg, 22119 Hamburg (DE)
(74) Vertreter: Patentship Patentanwaltgesellschaft

(57) **Zusammenfassung**

Die Erfindung betrifft ein Batteriesteckersystem für eine Traktionsbatterie einer mobilen Arbeitsmaschine (1), insbesondere eines Flurförderzeugs, umfassend eine Batteriesteckereinheit (5) und eine Gegensteckereinheit (6) und eine Fügehilfe (7), mit der die Gegensteckereinheit (6) mit der Batteriesteckereinheit (5) in Steckrichtung in Eingriff bringbar ist. Die Fügehilfe (7) weist eine Führungsbolzeneinrichtung (20) auf, die ausgebildet ist, die Gegensteckereinheit (6) in Steckrichtung (SR) zu führen, und einen Spindeltrieb (21) auf, der ausgebildet ist, Steckkräfte in Steckrichtung (SR) aufzubringen.

## Beschreibung

Die Erfindung betrifft eine Batteriesteckersystem für eine Traktionsbatterie einer mobilen Arbeitsmaschine, insbesondere eines Flurförderzeugs, umfassend eine Batteriesteckereinheit und eine Gegensteckereinheit und eine Fügehilfe, mit der die Gegensteckereinheit mit der Batteriesteckereinheit in Steckrichtung in Eingriff bringbar ist.

Mobile Arbeitsmaschinen mit einem batterie-elektrischen Antriebssystem weisen eine Traktionsbatterie auf, die das elektrischen Antriebssystem der Arbeitsmaschine mit elektrischer Energie versorgt. Hierzu ist es bekannt, eine Batteriesteckereinheit der Traktionsbatterie mit einer als fahrzeugseitige Steckereinheit ausgebildeten Gegensteckereinheit zu verbinden. Zum Aufladen der Traktionsbatterie an einem Ladegerät ist es bekannt, die Batteriesteckereinheit der Traktionsbatterie von der fahrzeugseitigen Steckereinheit zu trennen und die Batteriesteckereinheit der Traktionsbatterie mit einer als Lade-Steckereinheit eines Ladegeräts ausgebildeten Gegensteckereinheit zu verbinden.

Kleinere Batteriesteckereinheiten und Gegensteckereinheiten können per Handkraft von einer Bedienperson gesteckt und getrennt werden.

Zunehmend leistungsfähigere mobile Arbeitsmaschinen, beispielsweise Flurförderzeuge, erfordern größere Kabelquerschnitte und deshalb auch vergrößerte Steckereinheiten, d.h. Buchsen und Stecker, der in diesem Zusammenhang notwendigen Batteriesteckersysteme. Bei größeren Steckereinheiten sind höhere Steckkräfte erforderlich, um die Batteriesteckereinheit und die Gegensteckereinheit zu schließen (fügen) und zu öffnen (trennen), die von einer Bedienperson ohne Kraftunterstützung nicht mehr aufgebracht werden können.

Insbesondere bei mobilen Arbeitsmaschinen, insbesondere Flurförderzeugen, bei denen als Traktionsbatterie eine Lithium-Ionen-Batterie vorgesehen ist, die mit einer hohen Ladeleistung und hohen Strömen geladen werden kann, ist es erforderlich, großbauende Steckereinheiten des Batteriesteckersystems vorzusehen, deren Steckkräfte von einer Bedienperson per Hand ohne Kraftunterstützung nicht mehr aufgebracht werden können.

Aus diesem Grund sind bereits Batteriesteckersysteme vorgeschlagen worden, bei denen eine Fügehilfe, beispielsweise eine Hebelanordnung, insbesondere eine Kniehebelanordnung, durch eine Kraftübersetzung eine mechanische Unterstützung leistet und insbesondere beim Verbinden und somit Zusammenstecken der Batteriesteckereinheit und der Gegensteckereinheit größere Steckkräfte ermöglicht.

Ein gattungsgemäßes Batteriesteckersystem mit den Merkmalen des Oberbegriffs des Patentanspruchs 1, bei dem eine Hebelanordnung als Fügehilfe vorgesehen ist, ist aus der DE 10 2014 101 469 A1 bekannt.

Es hat sich jedoch gezeigt, dass bei bekannten, als Hebelanordnungen ausgebildeten Fügehilfen Winkelabweichungen beim Zusammenstecken der Batteriesteckereinheit und der Gegensteckereinheit zwischen Kontakt-Führungsbuchsen an einer der beiden Steckereinheiten und Kontaktstiften, in die die Kontakt-Führungsbuchen eingeführt werden, an der andere Steckereinheit auftreten. Dadurch tritt an Kontaktflächen zwischen den Kontakt-Führungsbuchsen und den Kontaktstiften der Steckereinheiten ein hoher Verschleiß auf, der zu erhöhten Wartungskosten und zu erhöhten Ausfallraten führt. Bei entsprechendem Verschleiß können sich zudem die Batteriesteckereinheit und die Gegensteckereinheit stark erhitzen, was zu einem Sicherheitsrisiko führen kann.

Der vorliegenden Erfindung liegt die Aufgabe zugrunde, ein Batteriesteckersystem für eine Traktionsbatterie einer mobilen Arbeitsmaschine, insbesondere eines Flurförderzeugs, der eingangs genannten Gattung zur Verfügung zu stellen, bei dem ein oder mehrere der genannten Nachteile verbessert sind.

Diese Aufgabe wird erfindungsgemäß dadurch gelöst, dass die Fügehilfe eine Führungsbolzeneinrichtung aufweist, die ausgebildet ist, die Gegensteckereinheit in Steckrichtung zu führen, und einen Spindeltrieb aufweist, der ausgebildet ist, Steckkräfte in Steckrichtung aufzubringen.

Mit der Führungsbolzeneinrichtung können Winkelabweichungen beim Zusammenstecken der Batteriesteckereinheit und der Gegensteckereinheit zwischen Kontakt-Führungsbuchsen an einer der beiden Steckereinheiten und Kontaktstiften, in die die Kontakt-Führungsbuchen eingeführt werden, an der andere Steckereinheit in einfacher und sicherer Weise minimiert bzw. vermieden werden, so dass die Führungsbolzeneinrichtung den Einschub und das Zusammenstecken der Batteriesteckereinheit und der Gegensteckereinheit ohne Winkelabweichungen ermöglicht. Dadurch können Verschleiß, der zu erhöhten Wartungskosten und zu erhöhten Ausfallraten führt, minimiert bzw. vermieden werden.

Mit dem Spindeltrieb können in einfacher und ergonomischer Weise hohe Steckkräfte in Steckrichtung aufgebracht werden, wodurch auch großbauende Steckereinheiten des Batteriesteckersystems in einfacher, schneller, sicherer und ergonomischer Weise zusammengesteckt werden können.

Gemäß einer vorteilhaften Ausgestaltungsform der Erfindung weist die Führungsbolzeneinrichtung mindestens einen Führungsbolzen auf, der in eine Führungsbohrung einführbar ist. Eine derartige aus mindestens einem Führungsbolzen und einer Führungsbohrung gebildete Führungsbolzeneinrichtung weist einen einfachen Bauaufwand und eine sichere Funktionsweise auf.

Gemäß einer vorteilhaften Ausgestaltungsform der Erfindung weist die Führungsbolzeneinrichtung zwei parallel zueinander angeordnete Führungsbolzen auf, die jeweils in eine Führungsbohrung einführbar sind. Mit einer derartigen Anordnung von zwei parallel zueinander angeordnete Führungsbolzen auf, die jeweils in eine Führungsbohrung einführbar sind, können in sicherer Weise Winkelabweichungen beim Zusammenstecken der Batteriesteckereinheit und der Gegensteckereinheit zwischen Kontakt-Führungsbuchsen an einer der beiden Steckereinheiten und Kontaktstiften, in die die Kontakt-Führungsbuchen eingeführt werden, an der andere Steckereinheit minimiert bzw. vermieden werden.

Gemäß einer vorteilhaften Ausgestaltungsform der Erfindung weisen die Führungsbolzen unterschiedliche Länge auf. Hierdurch wird die Handhabung der Batteriesteckereinheit beim Zusammenstecken der Batteriesteckereinheit und der Gegensteckereinheit vereinfacht, da die Führungsbolzen nacheinander in die entsprechenden Führungsbohrung eingefädelt werden können.

Gemäß einer vorteilhaften Ausgestaltungsform der Erfindung ist der mindestens eine Führungsbolzen an einem ersten Halter angeordnet und die Führungsbohrung in einem zweiten Halter ausgebildet. Die Batteriesteckereinheit und die Gegensteckereinheit können hierdurch in einfacher Weise durch den Anbau an einen der beiden Halter mit der Führungsbolzeneinrichtung versehen werden.

Gemäß einer vorteilhaften Ausgestaltungsform der Erfindung sind der mindestens eine Führungsbolzen und die Führungsbohrung parallel zu Kontaktstiften des Batteriesteckersystems angeordnet. Der mindestens eine Führungsbolzen und die Führungsbohrung erstrecken sich somit mit ihrer Längsachse in Steckrichtung, die von den Kontaktstiften definiert ist. Hierdurch können Winkelabweichungen beim Zusammenstecken der Batteriesteckereinheit und der Gegensteckereinheit zwischen Kontakt-Führungsbuchsen an einer der beiden Steckereinheiten und Kontaktstiften, in die die Kontakt-Führungsbuchen eingeführt werden, an der andere Steckereinheit in einfacher und sicherer Weise minimiert bzw. vermieden werden.

Gemäß einer vorteilhaften Ausgestaltungsform der Erfindung weist der Spindeltrieb eine Gewindespindel auf, die in eine Gewindebohrung einschraubbar ist. Mit einem von einer Gewindespindel und einer Gewindebohrung ausgebildeten Spindeltrieb können bei einfachem Bauaufwand für den Spindeltrieb in einfacher und ergonomischer Weise hohe Steckkräfte in Steckrichtung aufgebracht werden.

Gemäß einer vorteilhaften Ausgestaltungsform der Erfindung ist der Spindeltrieb mit einer Selbsthemmung ausgebildet. Hierdurch kann ein ungewolltes Lösen der zusammengesteckten Batteriesteckereinheit und Gegensteckereinheit sicher vermieden werden, wodurch sich eine hohe Betriebssicherheit erzielen lässt.

Gemäß einer vorteilhaften Ausgestaltungsform der Erfindung ist die Gewindespindel an dem ersten Halter drehbar angeordnet und ist die Gewindebohrung in dem zweiten Halter ausgebildet oder ist die Gewindespindel an dem zweiten Halter drehbar angeordnet und die Gewindebohrung in dem ersten Halter ausgebildet. Die an den beiden haltern angeordneten Batteriesteckereinheit und die Gegensteckereinheit können hierdurch in einfacher Weise durch die mittels des Spindeltriebs aufgebrachten Steckkräfte zusammengesteckt werden.

Gemäß einer vorteilhaften Ausgestaltungsform der Erfindung ist die Gewindespindel mittels eines Werkzeugs von einer Bedienperson betätigbar. Hierdurch wird eine ergonomische Betätigung der Gewindespindel durch eine Bedienperson ermöglicht.

Gemäß einer vorteilhaften Ausgestaltungsform der Erfindung ist das Werkzeug als Handkurbel, insbesondere Ratschenschlüssel, oder Elektroschrauber, insbesondere Akkuschrauber, ausgebildet. Die Gewindespindel weist hierzu an einem Ende ein geeignetes Drehmomentübertragungsprofil, beispielsweise einen geeigneten Schraubenkopf, auf, auf den das Werkzeug im Bedarfsfall aufgesteckt werden kann. Sofern das Werkzeug, beispielsweise ein Drehmomentschlüssel oder ein Elektroschrauber, mit einer Drehmomentbegrenzung versehen ist, können Fehlern beim Zusammenstecken der Batteriesteckereinheit und der Gegensteckereinheit wirksam vermieden werden, da die Drehmomentbegrenzung des Werkzeugs fest vorgegeben werden kann und somit Schäden vermieden werden.

Gemäß einer vorteilhaften Ausgestaltungsform der Erfindung ist die Batteriesteckereinheit an dem zweiten Halter und die Gegensteckereinheit an dem ersten Halter angeordnet oder ist die Batteriesteckereinheit an dem ersten Halter und die Gegensteckereinheit an dem zweiten Halter angeordnet. Hierdurch können in einfacher Weise mit der an den beiden Haltern angeordneten Führungsbolzeneinrichtung Winkelabweichungen beim Zusammenstecken der Batteriesteckereinheit und der Gegensteckereinheit zwischen Kontakt-Führungsbuchsen an einer der beiden Steckereinheiten und Kontaktstiften, in die die Kontakt-Führungsbuchen eingeführt werden, an der andere Steckereinheit in einfacher und sicherer Weise minimiert bzw. vermieden werden und mit dem an den beiden Haltern angeordneten Spindeltrieb hohe Steckkräfte in Steckrichtung beim Zusammenstecken der Batteriesteckereinheit und der Gegensteckereinheit aufgebracht werden.

Gemäß einer vorteilhaften Ausgestaltungsform der Erfindung ist die Gegensteckereinheit als fahrzeugseitige Steckereinheit der mobilen Arbeitsmaschine, insbesondere des Flurförderzeugs, ausgebildet. Die fahrzeugseitige Steckereinheit der mobilen Arbeitsmaschine verbindet die Traktionsbatterie mit dem elektrischen Antriebsystem der Arbeitsmaschine. **Mit** der erfindungsgemäßen Fügehilfe kann somit der Anschluss der Traktionsbatterie mit dem elektrischen Antriebssystem der Arbeitsmaschine beim Zusammenstecken der Batteriesteckereinheit mit der fahrzeugseitigen Steckereinheit erleichert und vereinfacht werden.

Gemäß einer vorteilhaften Ausgestaltungsform der Erfindung ist die Gegensteckereinheit als Lade-Steckereinheit eines Ladegeräts ausgebildet. Mit dem Ladegerät kann die Traktionsbatterie, insbesondere in einem in der Arbeitsmaschine eingebauten Zustand, aufgeladen werden. Mit der erfindungsgemäßen Fügehilfe kann somit der Anschluss der Traktionsbatterie mit dem Ladegerät beim Zusammenstecken der Batteriesteckereinheit mit der Lade-Steckereinheit des Ladegeräts für den Ladebetrieb der Traktionsbatterie erleichert und vereinfacht werden.

Weitere Vorteile und Einzelheiten der Erfindung werden beispielhaft anhand des in den schematischen Figuren dargestellten Ausführungsbeispiels näher erläutert. Hierbei zeigt
- Figur 1: eine mobile Arbeitsmaschine, insbesondere ein Flurförderzeug, mit einem erfindungsgemäßen Batteriesteckersystem,
- Figur 2: die Figur 1 mit dem Batteriesteckersystem in einem zusammengesteckten Zustand einer Batteriesteckereinheit und einer Gegensteckereinheit des erfindungsgemäßen Batteriesteckersystems,
- Figur 3: die Batteriesteckereinheit des erfindungsgemäßen Batteriesteckersystems in einer vergrößerten Darstellung,
- Figur 4: die Batteriesteckereinheit und die Gegensteckereinheit des erfindungsgemäßen Batteriesteckersystems vor dem Zusammenstecken,
- Figur 5: die Batteriesteckereinheit und die Gegensteckereinheit des erfindungsgemäßen Batteriesteckersystems im zusammengesteckten Zustand,
- Figur 6: eine Darstellung gemäß Pfeil A der Figur 5,
- Figur 7: eine Darstellung gemäß Pfeil B der Figur 6 und
- Figur 8: eine Einzelheit der Figur 7 in einer vergrößerten Darstellung.

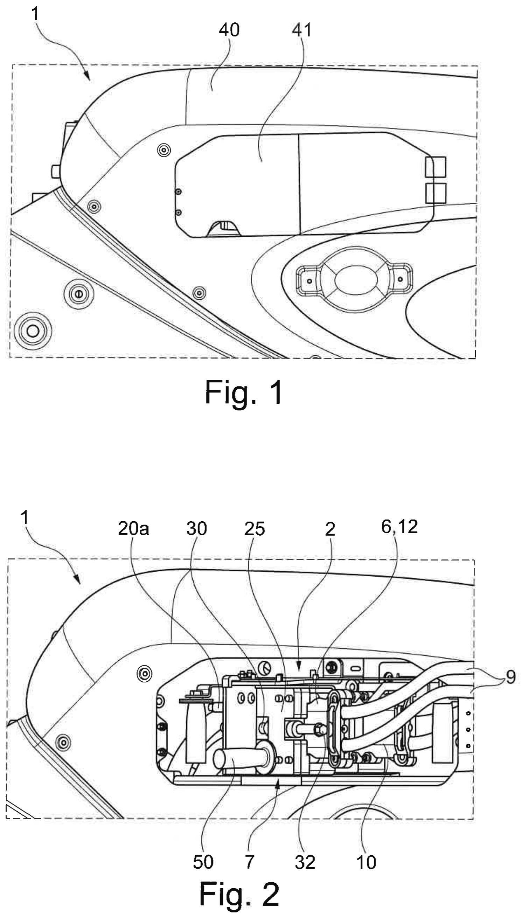

In den Figuren 1 bis 8 ist eine mobile Arbeitsmaschine 1 mit einem erfindungsgemäßen Batteriesteckersystem 2 für eine Traktionsbatterie dargestellt.

Die mobile Arbeitsmaschine 1 ist im dargestellten Ausführungsbeispiel als Flurförderzeug ausgebildet, das mit einer nicht näher dargestellten Traktionsbatterie, beispielsweis einer Lithium-Ionen-Batterie, versehen ist, die ein elektrisches Antriebsystem der mobilen Arbeitsmaschine mit elektrischer Energie versorgt.

Das Batteriesteckersystem 2 umfasst eine Batteriesteckereinheit 5, eine Gegensteckereinheit 6 und eine Fügehilfe 7, mit der die Gegensteckereinheit 6 mit der Batteriesteckereinheit 5 in Steckrichtung SR in Eingriff bringbar ist

Die Batteriesteckereinheit 5 ist mittels elektrischer Anschlusskabel 8 mit der Traktionsbatterie verbunden.

Im dargestellten Ausführungsbeispiel ist die Gegensteckereinheit 6 als Lade-Steckereinheit 12 eines nicht näher dargestellten Ladegeräts ausgebildet, mit dem die Traktionsbatterie in einem in der mobilen Arbeitsmaschine eingebauten Zustand aufgeladen werden kann. Die Gegensteckereinheit 6 ist mittels elektrischer Anschlusskabel 9 mit dem Ladegerät verbunden.

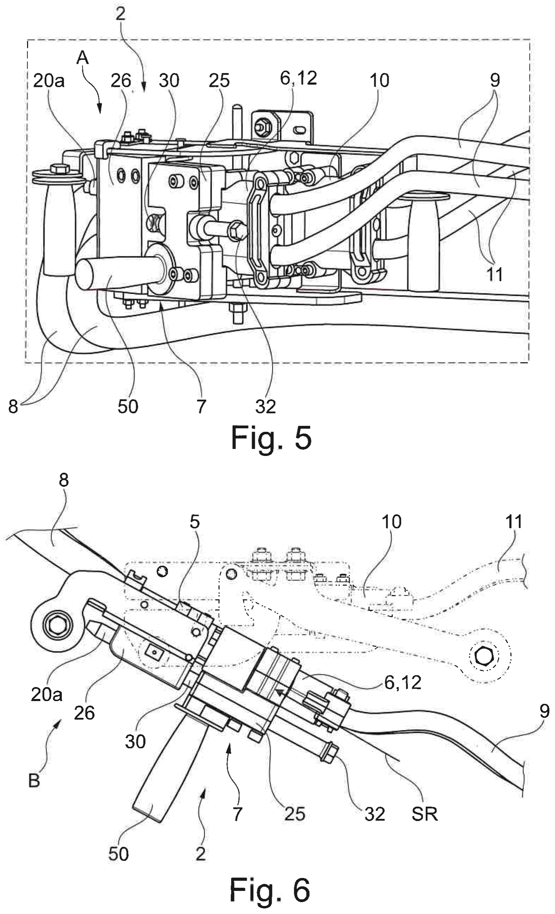

Die Batteriesteckereinheit 5 ist im dargestellten Ausführungsbeispiel mit zwei Kontaktstiften 5a, 5b versehen. Die Gegensteckereinheit 6 weist zwei nicht näher dargestellte Kontakt-Führungsbuchen auf, die beim Zusammenstecken der Gegensteckereinheit 6 und der Batteriesteckereinheit 5 auf die Kontaktstifte 5a, 5b aufgesteckt werden. In der Figur 6 ist die Steckrichtung SR verdeutlicht, die sich in Längsrichtung der Kontaktstifte 5a, 5b bzw. der Führungsbuchsen erstreckt.

In den Figuren ist weiterhin eine fahrzeugseitige Steckereinheit 10 der mobilen Arbeitsmaschine dargestellt, mit der die Batteriesteckereinheit 5 im Betrieb der Arbeitsmaschine verbunden ist. Die fahrzeugseitige Steckereinheit 10 ist mittels elektrischer Anschlusskabel 11 mit dem elektrischen Antriebsystem der Arbeitsmaschine verbunden.

Die Fügehilfe 7 weist eine Führungsbolzeneinrichtung 20 auf, die ausgebildet ist, die Gegensteckereinheit 6 in Steckrichtung SR zu führen. Die Fügehilfe 7 weist einen Spindeltrieb 21 auf, der ausgebildet ist, Steckkräfte in Steckrichtung SR aufzubringen.

Die Führungsbolzeneinrichtung 20 weist im dargestellten Ausführungsbeispiel zwei parallel zueinander angeordnete Führungsbolzen 20a, 20b auf, die jeweils in eine Führungsbohrung 22a, 22b einführbar sind.

Im dargestellten Ausführungsbeispiel weisen die beiden Führungsbolzen 20a, 20b unterschiedliche Länge auf. Im dargestellten Ausführungsbeispiel ist der Führungsbolzen 20a länger ausgeführt wie der Führungsbolzen 20b.

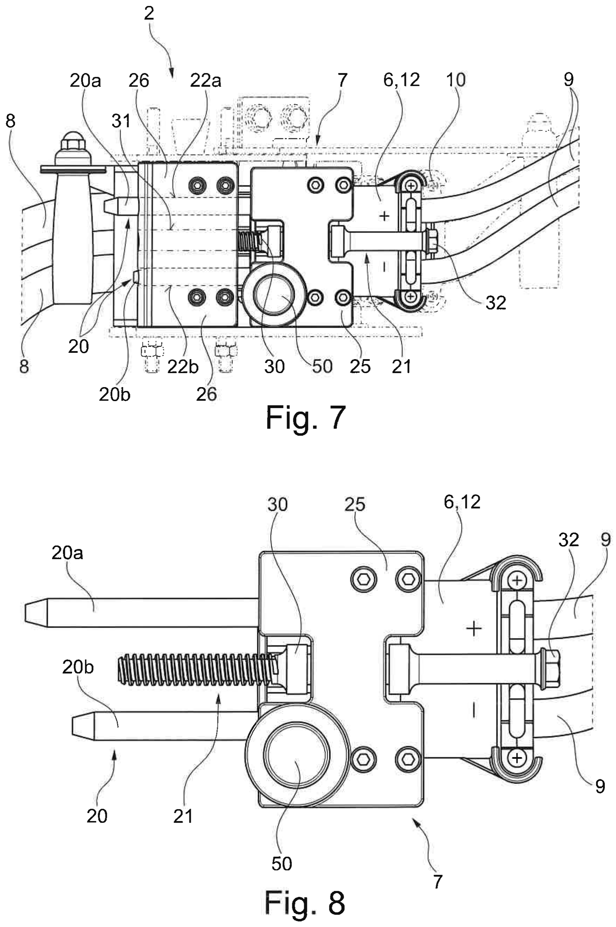

Die beiden Führungsbolzen 20a, 20b sind im dargestellten Ausführungsbeispiel an einem ersten Halter 25 angeordnet, wie unter anderem in der Figur 8 verdeutlicht ist. An dem ersten Halter 25 ist weiterhin die Gegensteckereinheit 6 angeordnet. Die Gegensteckereinheit 6 ist derart an dem mit den Führungsbolzen 20a, 20b versehenen ersten Halter 25 angeordnet, dass die Führungsbolzen 20a, 20b parallel zu den Kontakt-Führungsbuchen der Gegensteckereinheit 6 angeordnet sind. Die Führungsbolzen 20a, 20b erstrecken sich in Steckrichtung SR.

Die beiden Führungsbohrungen 22a, 22b sind im dargestellten Ausführungsbeispiel in einem zweiten Halter 26 ausgebildet. An dem zweiten Halter 26 ist weiterhin die Batteriesteckereinheit 5 angeordnet. Die Batteriesteckereinheit 5 ist derart an dem mit den Führungsbohrungen 22a, 22b versehenen zweiten Halter 26 angeordnet, dass die Führungsbohrungen 22a, 22b parallel zu den Kontaktstiften 5a, 5b der Batteriesteckereinheit 5 angeordnet sind. Die Führungsbohrungen 22a, 22b erstrecken sich in Steckrichtung SR.

Der Spindeltrieb 21 weist eine Gewindespindel 30 auf, die in eine Gewindebohrung 31 einschraubbar ist.

Der Spindeltrieb 21 ist bevorzugt mit einer Selbsthemmung ausgebildet.

Im dargestellten Ausführungsbeispiel ist die Gewindespindel 30 an dem ersten Halter 25 drehbar angeordnet - wie unter anderem in der Figur 8 verdeutlicht ist - und die Gewindebohrung 31 in dem zweiten Halter 26 ausgebildet. Die Gewindespindel 30 ist parallel zu den Führungsbolzen 20a, 20b angeordnet. Die Gewindebohrung 31 ist parallel zu den Führungsbohrungen 22a, 22b angeordnet.

Die Gewindespindel 30 ist mittels eines Werkzeugs von einer Bedienperson betätigbar. Ein aus dem Halter 25 herausragender Endbereich der Gewindespindel 30 ist mit einem Drehmomentübertragungsprofil 32, beispielsweise einem Schraubenkopf, versehen, auf den das Werkzeug, beispielsweise eine Handkurbel oder ein Ratschenschlüssel oder ein Elektroschrauber oder ein Akkuschrauber aufsteckbar ist.

In dem dargestellten Ausführungsbeispiel ist an dem ersten Halter 25 ein Handgriff 50 angeordnet, mit dem eine Bedienperson die Gegensteckereinheit 6 handhaben kann.

In der Figur 1 ist eine Außenwand 40 der mobilen Arbeitsmaschine 1 dargestellt, die mit einer Abdeckung oder Klappe 41 versehen ist, hinter der die fahrzeugseitige Steckereinheit 10 und die Batteriesteckereinheit 5 der Traktionsbatterie angeordnet sind.

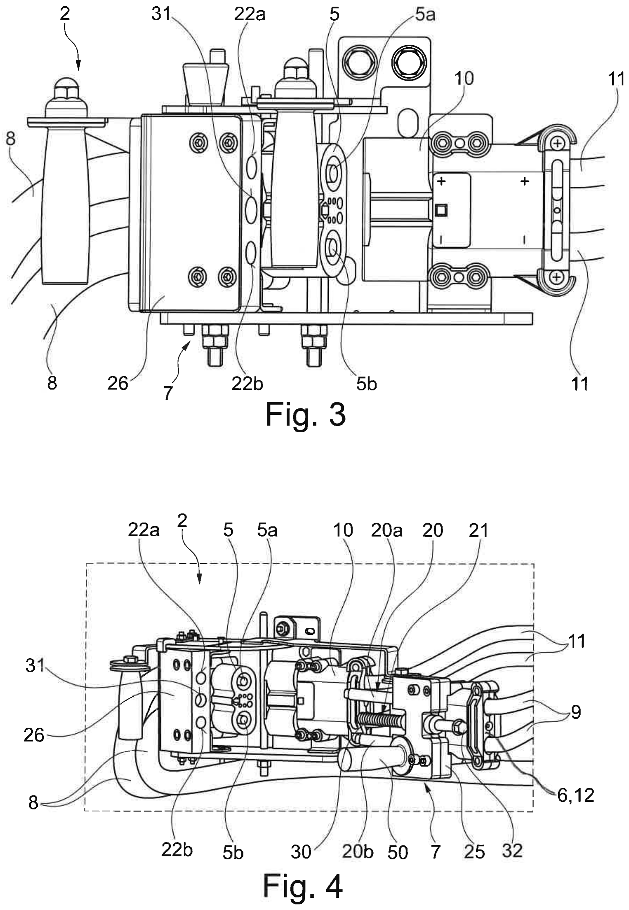

Zum Laden der Traktionsbatterie an einem Ladegerät wird die Abdeckung oder Klappe 41 entfernt bzw. geöffnet, die Batteriesteckereinheit 5 von der fahrzeugseitigen Steckereinheit 10 getrennt und die Batteriesteckereinheit 5 in eine in der Figur 3 dargestellte Ladeposition gebracht, in der die als Lade-Steckereinheit 12 des Ladegeräts ausgebildete Gegensteckereinheit 6 mit der Batteriesteckereinheit 5 zusammensteckbar ist (Figur 4).

Von einer Bedienperson wird hierzu der mit der Gegensteckereinheit 6 versehene erste Halter 25 in Richtung zu der Batteriesteckereinheit 5 bewegt - wie in der Figur 4 verdeutlicht ist -, wobei zuerst der längere Führungsbolzen 20a am ersten Halter 25 in die Führungsbohrung 22a am zweiten Halter 26 eingeführt wird und anschließend der kürzere Führungsbolzen 20b am ersten Halter 25 in die Führungsbohrung 22b am zweiten Halter 26 eingeführt wird. Die Führungsbolzen 20a, 20b können zum leichteren Einführen in die Führungsbohrungen 22a, 22b mit konischen Spitzen versehen sein.

Anschließend kann von der Bedienperson das Werkzeug auf das Drehmomentübertragungsprofil 32 der Gewindespindel 30 aufgesetzt werden und die Gewindespindel 30 betätigt werden, wodurch die Gewindespindel 30 in die Gewindebohrung 31 eingeschraubt wird und die Gegensteckereinheit 6, geführt von der Führungsbolzeneinrichtung 20, in Steckrichtung SR betätigt und mit der Batteriesteckereinheit 5 zusammengesteckt wird. Die Steckkräfte zum Zusammenstecken der Gegensteckereinheit 6 mit der Batteriesteckereinheit 5 werden von dem mittels des Werkzeugs betätigten Spindeltrieb 21 erzeugt. In den Figuren 2, 5 bis 7 sind die Gegensteckereinheit 6 und die Batteriesteckereinheit 5 im zusammengesteckten Zustand dargestellt, wobei in der Figur 2 die Abdeckung oder Klappe 41 entfernt bzw. geöffnet ist.

Die Gegensteckereinheit 6 ist an dem ersten Halter 25 derart angeordnet, dass die Kontakt-Führungsbuchsen der Gegensteckereinheit 6 erst dann in Kontakt mit den Kontaktstiften 5a, 5b der Batteriesteckereinheit 5 gelangen, nachdem beide Führungsbolzen 20a, 20b in die Führungsbohrungen 22a, 22b eingeführt wurden und dadurch die Gegensteckereinheit 6 in Steckrichtung SR geführt ist. Die von den Führungsbolzen 20a, 20b und den Führungsbohrungen 22a, 22b gebildete Führungsbolzeneinrichtung 20 ermöglicht dadurch das Zusammenstecken der Batteriesteckereinheit 5 und der Gegensteckereinheit 6 ohne Winkelabweichungen zwischen den Kontakt-Führungsbuchsen und den Kontaktstiften 5a, 5b.

Die Erfindung ist nicht auf das dargestellte Ausführungsbeispiel beschränkt.

Im dargestellten Ausführungsbeispiels sind die Führungsbolzen 20a, 20b und die Gewindespindel 30 an dem ersten Halter 25 angeordnet, an dem die Gegensteckereinheit 6 angeordnet ist, und die Führungsbohrungen 22a, 22b und die Gewindebohrung 31 an dem zweiten Halter 26 ausgebildet, an dem die Batteriesteckereinheit 5 angeordnet ist.

Alternativ kann an dem ersten Halter 25 die Batteriesteckereinheit 5 angeordnet sein und an dem zweiten Halter 26 die Gegensteckereinheit 6.

Alternativ können die Führungsbolzen 20a, 20b an dem ersten Halter 25 und die Gewindespindel 30 an dem zweiten Halter 26 angeordnet sein.

Der Anbau der Gewindespindel 30 an dem zweiten Halter 26 führt zu dem Vorteil, dass der erste Halter 25, an dem die Gegensteckereinheit 6 angebaut ist, leichter ausgeführt werden kann, wodurch sich eine verbesserte Handhabung der Gegensteckereinheit 6 durch die Bedienperson ergibt.

Der Anbau der Gewindespindel 30 an dem ersten Halter 25, an dem die als Lade-Steckereinheit 12 des Ladegeräts ausgebildeten Gegensteckereinheit 6 angeordnet ist, führt zu dem Vorteil, dass mit nur einer Gewindespindel 30 an mehreren mobilen Arbeitsmaschinen entsprechende Fügehilfen 7 betätigt werden können.

Alternativ können die Führungsbolzen 20a, 20b und die Gewindespindel 30 an dem zweiten Halter 26 angeordnet sein.

Alternativ können die Führungsbohrungen 22a, 22b und die Gewindebohrung 31 an dem ersten Halter 25 ausgebildet sein.

Alternativ ist es möglich, an dem ersten Halter 25 die Führungsbohrungen 22a, 22b und an dem zweiten Halter 26 die Führungsbolzen 20a, 20b anzuordnen, wobei die Gewindespindel 30 an dem ersten Halter 25 oder an dem zweiten Halter 26 angeordnet sein kann.

Alternativ ist es möglich, an dem ersten Halter 25 den Führungsbolzen 20a und die Führungsbohrung 22b anzuordnen und an dem zweiten Halter 26 den Führungsbozen 20b und die Führungsbohrung 22a, wobei die Gewindespindel 30 an dem ersten Halter 25 oder an dem zweiten Halter 26 angeordnet sein kann.

Im dargestellten Ausführungsbeispiel ist mittels der Fügehilfe 7 das Stecken der Batteriesteckereinheit 5 und des als Lade-Steckereinheit 12 des Ladegeräts ausgebildeten Gegensteckereinheit 6 unterstützt und geführt. Alterativ oder zusätzlich kann mittels der Fügehilfe 7 das Stecken der Batteriesteckereinheit 5 und des als fahrzeugseitige Steckereinheit 10 ausgebildeten Gegensteckereinheit 6 unterstützt und geführt sein, wenn an dem ersten Halter 25 die fahrzeugseitige Steckereinheit 10 angeordnet ist oder ein weiterer erster Halter 25 vorgesehen ist, an dem die fahrzeugseitige Steckereinheit 10 angeordnet ist.

Das Werkzeug zur Betätigung der Gewindespindel 30 kann in der mobilen Arbeitsmaschine mitgeführt werden oder an dem Ladegerät bereit gestellt werden. Sofern das Werkzeug an dem Ladegerät bereit gestellt ist, können mit nur einem Werkzeug an mehreren mobilen Arbeitsmaschinen entsprechende Fügehilfen 7 betätigt werden.

## Patentansprüche

1. Batteriesteckersystem für eine Traktionsbatterie einer mobilen Arbeitsmaschine (1), insbesondere eines Flurförderzeugs, umfassend eine Batteriesteckereinheit (5) und eine Gegensteckereinheit (6) und eine Fügehilfe (7), mit der die Gegensteckereinheit (6) mit der Batteriesteckereinheit (5) in Steckrichtung in Eingriff bringbar ist, **dadurch gekennzeichnet, dass** die Fügehilfe (7) eine Führungsbolzeneinrichtung (20) aufweist, die ausgebildet ist, die Gegensteckereinheit (6) in Steckrichtung (SR) zu führen, und einen Spindeltrieb (21) aufweist, der ausgebildet ist, Steckkräfte in Steckrichtung (SR) aufzubringen.

2. Batteriesteckersystem nach Anspruch 1, **dadurch gekennzeichnet, dass** die Führungsbolzeneinrichtung (20) mindestens einen Führungsbolzen (20a; 20) aufweist, der in eine Führungsbohrung (22a; 22b) einführbar ist.

3. Batteriesteckersystem nach Anspruch 1 oder 2, **dadurch gekennzeichnet, dass** die Führungsbolzeneinrichtung (20) zwei parallel zueinander angeordnete Führungsbolzen (20a, 20b) aufweist, die jeweils in eine Führungsbohrung (22a, 22b) einführbar sind.

4. Batteriesteckersystem nach Anspruch 2 oder 3, **dadurch gekennzeichnet, dass** die Führungsbolzen (20a, 20b) unterschiedliche Länge aufweisen.

5. Batteriesteckersystem nach einem der Ansprüche 2 bis 4, **dadurch gekennzeichnet, dass** der mindestens eine Führungsbolzen (20a; 20b) an einem ersten Halter (25) angeordnet ist und die Führungsbohrung (22a; 22b) in einem zweiten Halter (26) ausgebildet ist.

6. Batteriesteckersystem nach einem der Ansprüche 2 bis 5, **dadurch gekennzeichnet, dass** der mindestens eine Führungsbolzen (20a; 20b) und die Führungsbohrung (22a; 22b) parallel zu Kontaktstiften (5a, 5b) des Batteriesteckersystems (2) angeordnet sind.

7. Batteriesteckersystem nach einem der Ansprüche 1 bis 6, **dadurch gekennzeichnet, dass** der Spindeltrieb (21) eine Gewindespindel (30) aufweist, die in eine Gewindebohrung (31) einschraubbar ist.

8. Batteriesteckersystem nach Anspruch 7, **dadurch gekennzeichnet, dass** der Spindeltrieb (21) mit einer Selbsthemmung ausgebildet ist.

9. Batteriesteckersystem nach Anspruch 7 oder 8, **dadurch gekennzeichnet, dass** die Gewindespindel (30) an dem ersten Halter (25) drehbar angeordnet ist und die Gewindebohrung (31) in dem zweiten Halter (26) ausgebildet ist oder dass die Gewindespindel (30) an dem zweiten Halter (26) drehbar angeordnet ist und die Gewindebohrung (31) in dem ersten Halter (25) ausgebildet ist.

10. Batteriesteckersystem nach einem der Ansprüche 7 bis 9, **dadurch gekennzeichnet, dass** die Gewindespindel (30) mittels eines Werkzeugs von einer Bedienperson betätigbar ist.

11. Batteriesteckersystem nach Anspruch 10, **dadurch gekennzeichnet, dass** das Werkzeug als Handkurbel, insbesondere Ratschenschlüssel, oder Elektroschrauber, insbesondere Akkuschrauber, ausgebildet ist.

12. Batteriesteckersystem nach einem der Ansprüche 5 bis 11, **dadurch gekennzeichnet, dass** die Batteriesteckereinheit (5) an dem zweiten Halter (26) und die Gegensteckereinheit (6) an dem ersten Halter (25) angeordnet ist oder dass die Batteriesteckereinheit (5) an dem ersten Halter (25) und die Gegensteckereinheit (6) an dem zweiten Halter (26) angeordnet ist.

13. Batteriesteckersystem nach einem der Ansprüche 1 bis 12, **dadurch gekennzeichnet, dass** die Gegensteckereinheit (6) als fahrzeugseitige Steckereinheit (10) der mobilen Arbeitsmaschine, insbesondere des Flurförderzeugs, ausgebildet ist.

14. Batteriesteckersystem nach einem der Ansprüche 1 bis 12, **dadurch gekennzeichnet, dass** die Gegensteckereinheit (6) als Lade-Steckereinheit (12) eines Ladegeräts ausgebildet ist.
